# EUROPÄISCHE PATENTSCHRIFT

(11) **EP 1 664 950 B1**
(45) Veröffentlichungstag und Bekanntmachung des Hinweises auf die Patenterteilung: **30.12.2009**
(21) Anmeldenummer: 04764571.8
(22) Anmeldetag: 27.08.2004
(51) Int. Cl.: G05B 19/409, H04Q 9/00

(54) **EINRICHTUNG ZUR KOMMUNIKATION MIT EINER ANLAGE**
DEVICE FOR COMMUNICATING WITH A SYSTEM
DISPOSITIF POUR COMMUNIQUER AVEC UN APPAREIL

(30) Priorität: 24.09.2003 DE 10344361
(43) Veröffentlichungstag der Anmeldung: 07.06.2006
(73) Patentinhaber: SIEMENS AKTIENGESELLSCHAFT, 80333 München (DE)
(72) Erfinder: RIEGER, Gottfried, 90766 Fürth (DE)
(86) Internationale Anmeldenummer: PCT/EP2004/009597
(87) Internationale Veröffentlichungsnummer: WO 2005/040947

(56) Entgegenhaltungen:
- DE-A- 3 813 590
- DE-A- 4 139 041
- DE-A- 19 830 880

## Beschreibung

Die Erfindung betrifft eine Vorrichtung zur Kommunikation mit einer Anlage, insbesondere zum Bedienen und Beobachten einer Automatisierungsanlage in der industriellen Fertigung.

Industrielle Automatisierungsanlagen benötigen mit ihnen in Verbindung stehende Ein- oder Ausgabegeräte, um betrieben werden zu können; hierbei handelt es sich um die sogenannte Prozesskopplung. Ausgabegeräte, oder mit anderen Worten Beobachtungsgeräte, sind zum Beispiel Kontrollleuchten, alphanumerische oder graphische Displays, die den Anlagenbediener über den aktuellen Anlagenzustand informieren. Eingabegeräte, oder mit anderen Worten Bediengeräte, sind z. B. Schalter, Drehknöpfe oder Tastaturen zur alphanumerischen Eingabe, die es dem Bediener ermöglichen, auf die Anlage einzuwirken.

In herkömmlicher Weise sind zum Zweck der Kommunikation zwischen Benutzer und Anlage sogenannte Bedien- und Beobachtungsgeräte, im folgenden kurz Kommunikationsgerät genannt, fest an der Anlage selbst oder z.B. in der Fertigungshalle, in der sich die Anlage befindet, installiert. Ein typisches Kommunikationsgerät weist ein handliches Gehäuse auf, an dem Ein- und Ausgabegeräte angeordnet sind. Der Datenaustausch mit der Anlage bzw. mit deren Steuerung erfolgt über eine fest installierte Anschlussleitung.

Es sind auch Kommunikationsgeräte bekannt, die über ein mehr oder weniger langes Kabel mit der Anlage verbunden sind und dem Bediener eine Beweglichkeit an bzw. entlang der Anlage im Rahmen der Reichweite des Kabels ermöglichen, wobei er das Kommunikationsgerät mit sich führen kann.

Bei sehr großen oder schwer zugänglichen Anlagen sind kabelgebundene Kommunikationsgeräte nicht mehr handhabbar. Hierzu existieren mobile, also frei bewegliche, drahtlos mit der Anlage kommunizierende und batteriebetriebene Kommunikationsgeräte, welche den Datenaustausch mit der Anlage per Funkverbindung abwickeln. Für derartige Kommunikationsgeräte existieren sogenannte Dockingstationen, z.B. in.Form einer Ablageschale, die zur Aufnahme der Kommunikationsgeräte und zur Aufladung der in den Geräten vorhandenen Akkumulatoren dienen. Die Ablageschalen befinden sich z.B. neben der Anlage oder in separaten Räumen wie der Meisterkabine.

Aus der DE 41 39 041 A1 ist eine Arbeitsmaschine bekannt, welche eine Funkfernsteuerung aufweist. Hier existiert nur ein einziges Bedienteil, welches optional per Funk oder durch ein Kabel mit der Arbeitsmaschine verbindbar ist. Die Arbeitsmaschine kann also wahlweise per Funkfernsteuerung oder per Kabel mit dem entsprechenden Fernbediengerät bedient werden. Die gesamte Funktionalität des Fernsteuergerätes steht stets zur Verfügung, egal ob dieses per Funk oder per Kabel mit der Maschine gekoppelt ist.

Aus der DE 38 13 590 A1 ist eine Werkzeugmaschine bekannt, welche zwei verschiedene Bediengeräte aufweist. Nämlich ein Fernsteuerteil zum Einrichten der Maschine bei geöffnetem Gehäuse und ein fest installiertes Steuerpult zum Betreiben der Maschine im Normalbetrieb. Hier sind gegenseitige Sicherungsmaßnahmen vorgesehen, z.B. dass das fest installierte Steuerpult während des Betriebes des Fernsteuerteils ausgeschaltet wird oder das Fernsteuerteil bei Ablage in einer speziell vorhergesehenen Ablage deaktiviert wird und nur die jeweils andere Bedieneinheit eingeschaltet bleibt.

Um einen Fertigungsprozess auf einer Anlage einzurichten, wird diese zunächst in einem Einricht- oder Lernbetrieb genannten Betriebsmodus angefahren. Hierbei werden über die angeschlossenen Kommunikationsgeräte Feinabstimmungen an der Anlage durchgeführt, z.B. die Verfahrwege von Roboterarmen eingestellt. Drahtlos arbeitende Kommunikationsgeräte werden normalerweise nur während des Einrichtbetriebs verwendet, da hier der Bediener maximale Beweglichkeit an der Anlage benötigt, um Teilprozesse genau beobachten und dabei einrichten zu können.

Ist der Fertigungsprozess auf der Anlage eingerichtet, so wird die Anlage in den Normalbetrieb gebracht, z.B. deren Produktionsgeschwindigkeit erhöht. Während des Normalbetriebs sind kabellose Kommunikationsgeräte normalerweise nicht not- - wendig oder sogar unerwünscht, da sie batteriebetrieben sind und somit nur eine begrenzte Einsatzdauer aufweisen, oder weil das Funknetz des Anlagenbetreibers unnötig belastet wird. Die mobilen Kommunikationsgeräte werden deshalb abgelegt oder müssen nach DIN sogar weggeschlossen werden, wenn sie über sicherheitsrelevante Funktionen (Stop- oder Zustimmfunktion) verfügen. Die Kommunikation mit der Anlage während des Normalbetriebs erfolgt dann über herkömmliche, fest installierte Kommunikationsgeräte, die oft auch eine andere Funktionalität aufweisen, z.B. bestimmte Funktionen zur Einrichtung des Anlagenprozesses gar nicht zur Verfügung stellen.

Für verschiedene Betriebszustände der Anlage sind also bisher verschiedene Kommunikationsgeräte notwendig, die somit mehrfach angeschafft werden müssen. Auch müssen alle Kommunikationsgeräte gewartet, verwaltet oder entsprechend programmiert werden, was sowohl einen hohen Kosten-, als auch Arbeitsaufwand bedingt.

Aufgabe der vorliegenden Erfindung ist es, eine Vorrichtung zur Kommunikation mit einer Anlage anzugeben, die unaufwendiger und kostengünstiger ausgeführt ist.

Die Aufgabe wird gelöst durch eine Vorrichtung zur Kommunikation mit einer Anlage, insbesondere zum Bedienen und Beobachten einer Automatisierungsanlage in der industriellen Fertigung, die ein mobiles Kommunikationsgerät zum drahtlosen Datenaustausch mit der Anlage aufweist. Außerdem enthält die Vorrichtung einen ortsfest installierten Anschluss für das Kommunikationsgerät und einen Sensor zur Erkennung, ob das Kommunikationsgerät am Anschluss angeschlossen ist.

Durch das mobile, also frei bewegbare, drahtlos arbeitende Kommunikationsgerät ist für den Anlagenbediener maximale Bewegungsfreiheit an der Anlage gegeben. Der Bediener kann im Einrichtbetrieb einen optimalen Standort frei wählen, um die Anlagenfunktion bestmöglich zu kontrollieren oder zu justieren.

Nach Beendigung des Einrichtbetriebes kann der Bediener das Kommunikationsgerät am ortsfest installierten Anschluss anschließen.

Ortsfest installiert heißt in diesem Zusammenhang, dass der Anschluss eine dauerhafte Verbindung zur Anlage aufweist, und diesem ein definierter Ort an der Anlage zugewiesen ist. Dies kann auch eine in geringem Maße flexible Zuleitung von der Anlage zum Anschluss einschließen, um den Anschluss bedienfreundlich platzieren zu können.

Der Sensor kann z.B. eine Lichtschranke, ein Näherungssensor oder eine Kontaktschleife sein. Er erkennt, dass das Kommunikationsgerät angeschlossen ist. Die Anlagensteuerung ist mit dem Sensor verbunden und kann diese Information auswerten und dies auch dem Kommunikationsgerät mitteilen. Das Anschließen des Kommunikationsgerätes kann so z.B. als Signal dienen, um die Anlage in den Normalbetrieb umzuschalten und am Kommunikationsgerät die einrichtspezifische Funktionalität zu deaktivieren.

Es kann also durch Nutzung der Sensorinformation eine Beeinflussung der Funktionalität des Kommunikationsgerätes erfolgen. So können z.B. bestimmte Taster im angeschlossenen Zustand des Kommunikationsgerätes wirkungslos geschaltet werden, wenn diese nur zum Einrichtbetrieb erforderlich sind. Es kann auch ein graphisches Display am Kommunikationsgerät je nach dessen Anschlusszustand andere Informationen anzeigen. Hier stehen über die Programmierung der Anlage bzw. der Steuerung mannigfaltige Möglichkeiten zur Verfügung. Die weitere Bedienung der Anlage im Normal- bzw. Fertigungsbetrieb erfolgt weiterhin mit demselben, nun am Anschluss angeschlossenen Kommunikationsgerät wie beim Einrichtbetrieb.

Ein wirtschaftlicher Vorteil für den Anlagenbetreiber ist, dass er nur die Investition für ein einziges Kommunikationsgerät tätigen muss, mit dem die Anlage in sämtlichen Betriebsmodi bedien- und beobachtbar ist. Ein weiterer Vorteil der Vorrichtung ist, dass an der Anlage ein definierter Platz, nämlich der fest installierte Anschluss gegeben ist, an der das Kommunikationsgerät im Normalbetrieb der Anlage angeschlossen und somit jederzeit leicht aufzufinden ist. Das Kommunikationsgerät muss auch nicht weggeschlossen werden, da es auch für den Normalbetrieb der Anlage bestimmt ist.

Auch während der normalen Fertigung kann es Bedarf geben, die Anlage kurzzeitig in einen dem Einrichtbetrieb ähnlichen Korrekturbetrieb zu schalten, um z.B. Teile der Anlage nachzujustieren. Dies bedurfte bisher der Wiederinbetriebnahme des drahtlos arbeitenden, separaten Kommunikationsgerätes, welches oft erst vom Ort, an dem es verwahrt ist, geholt werden musste.

Wird das erfindungsgemäße Kommunikationsgerät vom Anschluss wieder entfernt, was wiederum durch den Sensor erkannt wird, so wechselt die Anlage z.B. in einen Korrekturmodus. Am Kommunikationsgerät kann hierbei bestimmte zusätzliche Funktionalität ähnlich wie beim Einrichtbetrieb aktiviert werden. So können ohne zusätzlichen Geräte- und Zeitaufwand, Korrekturen an der laufenden Fertigung durchgeführt werden und das Kommunikationsgerät anschließend einfach wieder angeschlossen werden. Die Anlage kann nun wieder in den Fertigungsbetrieb übergehen.

Die Erkennung des Geräteanschlusses durch den Sensor kann auch z.B. dazu benutzt werden, um beispielsweise bei Schichtende zu kontrollieren, ob tatsächlich alle an der Anlage verfügbaren Kommunikationsgeräte wieder am vorgesehenen Platz angeschlossen sind.

In einer vorteilhaften Ausgestaltung weist das Kommunikationsgerät eine Anschlussleitung auf und der Anschluss enthält einen Leitungsanschluss für diese Anschlussleitung. Dies ermöglicht dem Bediener eine gegenüber dem völlig frei bewegbaren, also nicht angeschlossenen Kommunikationsgerät eingeschränkte, aber dennoch innerhalb der Reichweite der Anschlussleitung mögliche Beweglichkeit zum Bedienen und Beobachten der Anlage auch, während das Kommunikationsgerät angeschlossen ist und sich die Anlage beispielsweise im Normalbetrieb befindet. Der Sensor wirkt in diesem Fall über die Anschlussleitung mit dem Kommunikationsgerät zusammen. Natürlich kann die Anschlussleitung auch lösbar vom Kommunikationsgerät sein.

In vorteilhafter Weise enthält der Anschluss eine Ablage, in der das Kommunikationsgerät ablegbar ist. Hierdurch ist an der Anlage ein definierter Ort vorhanden, an dem das Kommunikationsgerät aufbewahrt ist, so lange es angeschlossen ist. Hiermit ist vermieden, dass das Kommunikationsgerät auf einem zusätzlichen Tisch oder der Erde abgelegt werden muss und der genaue Platz, an dem es aufzufinden ist, ist bekannt. In diesem Fall erkennt der Sensor, ob das Kommunikationsgerät in der Ablage einliegt und somit an der Anlage befestigt ist.

Vorteilhaft ist weiterhin, wenn das Kommunikationsgerät in der Ablage verschließbar verankert ist. So kann es z. B im angeschlossenen Zustand nicht entwendet oder von unbefugtem Personal entfernt werden, was z.B. zu einer Umschaltung der Anlage vom Fertigungs- in den Einrichtbetrieb führen würde oder den Benutzer durch Änderung der Funktionalität des Kommunikationsgeräts berechtigte, Einstellungen bzw. Veränderungen am Fertigungsprozess durchzuführen. Eine Entnahme des Kommunikationsgerätes ist z.B. nur mit einem vom Meister verwalteten Schlüssel möglich.

Ist der Sensor ein mit dem Kommunikationsgerät oder dessen Anschlussleitung zusammenwirkender Schalter, so ist er dadurch besonders einfach, störsicher und kostengünstig zu realisieren.

In einer besonderen Ausführungsform weist die Vorrichtung einen Datenanschluss zum drahtgebundenen Datenaustausch zwischen Anlage und Kommunikationsgerät auf. Dieser kann z.B. in der Anschlussleitung oder der Ablage integriert sein. Außerdem enthält die Vorrichtung einen Umschalter zur Umschaltung zwischen drahtlosem und drahtgebundenem Datenaustausch. Die Umschaltung des Datenaustauschs kann hierbei so erfolgen, dass die Prozesskopplung nicht unterbrochen wird. Im Datenanschluss kann z.B. eine Feldbusankopplung oder auch zusätzliche Leitungen für sicherheitsrelevante Funktionen integriert sein.

In der Regel ist drahtloser Datenaustausch immer störanfälliger bzw. unsicherer als drahtgebundener Datenaustausch. Außerdem ist zum Funkbetrieb meist höherer Energieaufwand notwendig, der vom Kommunikationsgerät bereitgestellt werden muss und z.B. im oben erwähnten Normalbetrieb der Anlage ist der drahtlose Datenaustausch in der Regel nicht notwendig, da das Kommunikationsgerät in diesem Fall angeschlossen ist. Die Umschaltung auf drahtgebundene Kommunikation führt also zu sicherer, störunanfälligerer Kommunikation und. z.B. geringerer EMV-Belastung der Anlage durch Funkwellen. Außerdem wird das Funknetz entlastet.

Besonders vorteilhaft ist die Vorrichtung, wenn der Sensor mit dem Umschalter derart zusammenwirkt, dass eine automatische Umschaltung auf drahtgebundenen Datenaustausch erfolgt, wenn das Kommunikationsgerät am Anschluss angeschlossen ist. Somit ist z. B. sichergestellt, dass immer bei Anschluss des Kommunikationsgerätes auf den störunanfälligeren drahtgebundenen Datenaustausch umgeschaltet wird. Der Bediener kann auch z. B. nicht vergessen, von Hand die Art des Datenaustauschs umzuschalten.

Zum Betrieb des frei bewegbaren, drahtlos arbeitenden Kommunikationsgerätes muss dieses mit einer elektrischen Energiequelle ausgestattet sein. Eine vorteilhafte Weiterbildung der Erfindung sieht deshalb in der Vorrichtung vor, dass der Anschluss eine Spannungsversorgung für das Kommunikationsgerät enthält. Dieser kann wiederum z.B. in die Anschlussleitung oder die Ablage integriert sein. Hierdurch wird der Energiespeicher im Kommunikationsgerät im angeschlossenen Zustand geschont oder kann sogar, falls es sich um einen Akkumulator handelt, wieder aufgeladen werden. Außerdem steht so im angeschlossenen Zustand dem Kommunikationsgerät ausreichend Energie zur Verfügung, um z.B. eine Beleuchtung am Kommunikationsgerät auf maximaler Helligkeit zu betreiben.

Für eine weitere Beschreibung der Erfindung wird auf die Ausführungsbeispiele der Zeichnungen verwiesen. Es zeigen, jeweils in einer Prinzipskizze:
- Fig. 1: frei bewegliche, drahtlos arbeitende Kommunikationsgeräte in einer industriellen Anlage im nicht angeschlossenen Zustand bei drahtlosem Datenaustausch mit der Anlage,
- Fig. 2: die Industrieanlage aus Fig. 1 mit den Kommunikationsgeräten im angeschlossenen Zustand bei kabelgebundener Kommunikation.

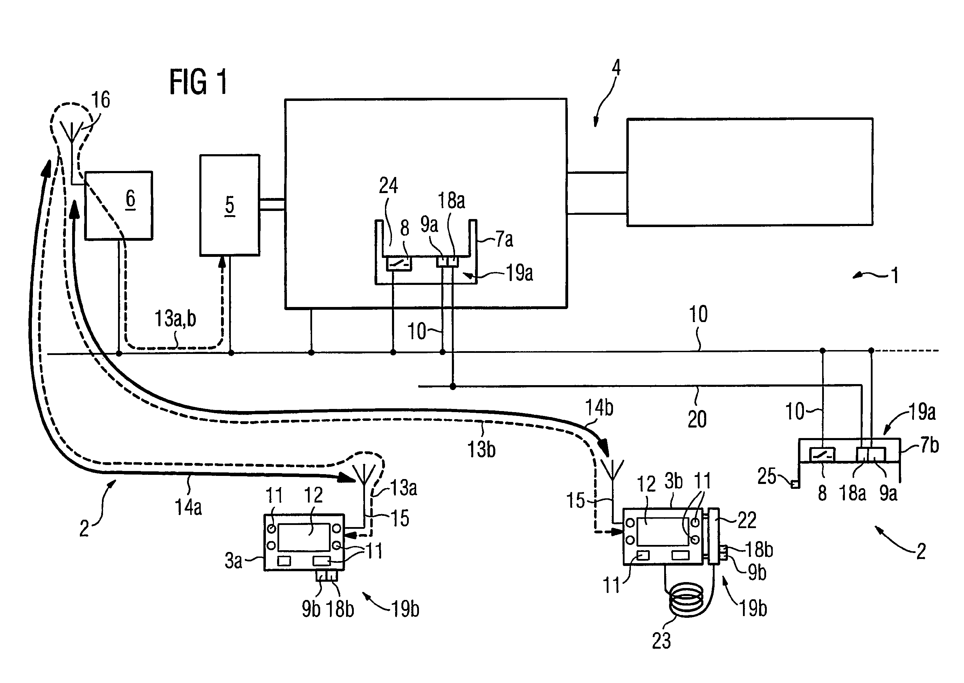

Fig. 1 zeigt eine Automatisierungsanlage 1 mit einem fest installierten Anlagenteil 2 und zwei mobilen Kommunikationsgeräten 3a,b. Der Anlagenteil 2 umfasst eine Fertigungsmaschine 4, im folgenden kurz Maschine 4 genannt, eine die Maschine 4 steuernde Steuerung 5 und eine Funkstation 6. Die Maschine 4 ist sehr groß und von einem einzigen Standpunkt aus für einen Bediener nicht überschaubar. An der Maschine 4 ist an einem Ende ein erster Anschluss 7a fest angebracht, z.B. angeschraubt. Ein zweiter Anschluss 7b ist neben dem anderen Ende der Maschine 4, z.B. an der Wand der nicht dargestellten Fertigungshalle befestigt, in der die Maschine 4 steht. Die Anschlüsse 7a,b sind, da sie sich im Fertigungsbereich der Anlage 1 befinden, industrietauglich ausgeführt, also wassergeschützt, staubgeschützt und mechanisch stabil.

Der Anschluss 7a weist eine Ablageschale 24 auf, die zur Aufnahme des Kommunikationsgerätes 3a dient, welches in Fig. 1 jedoch aus dem Anschluss 7a bzw. der Ablageschale 24 entnommen ist. Der Anschluss 7a enthält einen Sensor 8 in Form eines Schalters und einen Datenanschluss 9a, der mit Kontakten 18a zur Spannungsversorgung, in der Regel 24V, in einem Anschlussstecker 19a integriert ist.

Der Anschluss 7b enthält ebenfalls einen Sensor 8, und einen Anschlussstecker 19a mit Datenanschluss 9a und Kontakten 18a für Versorgungsspannung. Der Anschluss 7b ist jedoch nicht als Ablageschale, sondern als industrietaugliche Anschlussbuchse, sogenannter Access-Point, ausgeführt. Am Anschluss 7b ist außerdem eine mit einem nicht dargestellten Schlüssel abschließbare Verriegelung 25 angebracht.

Sämtliche Komponenten des Anlagenteils 2 sind miteinander über einen Feldbus 10 zum Datenaustausch verbunden. Der Datenanschluss 9a stellt also eine Feldbusankopplung zur Verfügung. Im Anschlussstecker 19a können weitere zusätzliche, nicht dargestellte Anschlussleitungen, z.B. mit sicherheitsrelevanter Funktion, integriert sein. Die Kontakte 18a sind am Spannungsnetz 20 der Automatisierungsanlage 1 angeschlossen.

Die Kommunikationsgeräte 3a,b verfügen als Eingabegeräte über Drucktasten 11, mit denen die Maschine 4 über die Steuerung 5 bedient werden kann, sowie über eine Anzeige 12 als Ausgabegerät, auf der aktuelle Maschinenparameter der Maschine 4 dargestellt sind und mit deren Hilfe also die Maschine 4 beobachtet werden kann. Außerdem ist an den Kommunikationsgeräten 3a,b je eine zum Anschlussstecker 19a passende Anschlussbuchse 19b angebracht, die die zum Anschlussstecker 19a passenden Gegenkontakte enthält, wie einen Datenanschlüsse 9b und Kontakte 18b für Versorgungsspannungen. Die Stromversorgung der Kommunikationsgeräte 3a,b erfolgt in Fig. 1 über darin enthaltene, nicht dargestellte Akkumulatoren.

Die Kommunikationsgeräte 3a,b unterschieden sich durch die an ihnen angebrachten Anschlussbuchsen 19b. Beim Kommunikationsgerät 3a ist diese fest am Gehäuse angebracht, beim Kommunikationsgerät 3b hingegen an einem abnehmbaren Kontaktstück 22. Das Kontaktstück 22 wiederum ist am Kommunikationsgerät 3b über eine flexible Zuleitung 23 dauerhaft angeschlossen.

Die Kommunikation zwischen je einem Kommunikationsgerät 3a,b und der Steuerung 5 erfolgt entlang von Kommunikationsstrecken, die durch die Pfeile 13a,b dargestellt sind. Die Kommunikationsstrecken 13a,b verlaufen zwischen Kommunikationsgerät 3a,b und Funkstation 6 zunächst über Funkstrecken 14a,b welche zwischen den Antennen 15,16 an den Kommunikationsgeräten 3a,b und der Funkstation 6 gebildet sind. In der Funkstation 6 werden die Kommunikationsdaten von der Antenne 16 zum Feldbus 10 umgesetzt und über den Feldbus 10 zur Steuerung 5 übertragen.

Die Sensoren 8 sind über den Feldbus 10 an der Steuerung 5 angeschlossen. Über die Sensoren 8, die wegen der in Fig. 1 entnommen Kommunikationsgeräte 3a,b unbelegt sind, erkennt die Steuerung 5, dass die Kommunikationsgeräte 3a,b entnommen, also nicht angeschlossen sind. Die Anschlussstecker 19a haben in diesem Betriebzustand keine Verbindung zu den Anschlussbuchsen 19b an den Kommunikationsgeräten 3a,b.

Die Verwertung der Information der Sensoren 8, dass die Kommunikationsgeräte 3a,b entnommen sind, ist in der Steuerung 5 frei programmierbar. In Fig. 1 ist die Steuerung 5 so programmiert, dass sich wegen der entnommenen Kommunikationsgeräte 3a,b die Maschine im Einrichtbetrieb befindet. Für andere Anlagen kann jedoch auch eine andere Funktionalität gewünscht sein.

Im Einrichtbetrieb kann wegen der Prozesskopplung zur Maschine 4 per Funk ein das Kommunikationsgerät 3a,b handhabender Bediener eine optimale Position für sich am Anlagenteil 2 frei wählen oder beliebig verändern und von dort aus die Maschine 4 bedienen und beobachten.

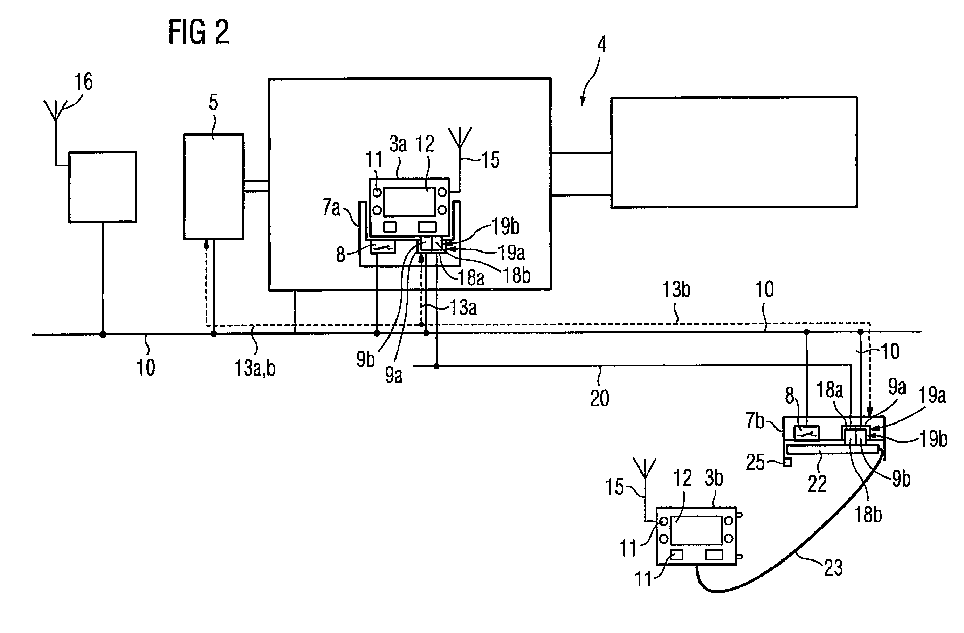

In Fig. 2 sind die Kommunikationsgeräte 3a,b in die Anschluss 7a,b eingelegt. Hierdurch sind die Sensoren 8 nach unten gedrückt, und deshalb in einer Schließstellung. Die Steuerung 5 erkennt über die Sensoren 8, dass die Kommunikationsgeräte 3a,b eingelegt sind und teilt dies auch den Kommunikationsgeräten 3a,b mit. Diese Information kann von der Steuerung 5 z.B. dazu benutzt werden, die Maschine 4 nun im normalen Fertigungsbetrieb zu betreiben. In den Kommunikationsgeräten 3a,b kann daraufhin z.B. deren Funktionalität geändert werden, also z.B. bestimmte Taster 11 wirkungslos sein oder an der Anzeige 12 andere Maschinenparameter angezeigt werden.

In Fig. 2 sind beide Kommunikationsgeräte 3a,b an den für sie vorgesehenen Anschlüssen 7a,b angeschlossen, z.B. eingerastet. Beim Kommunikationsgerät 3b ist hierzu das Kontaktstück 22 vom eigentlichen Gerätekörper gelöst und im Anschluss 7b eingesteckt. Während das Kommunikationsgeräte 3a nun ortsfest angeschlossen ist, ist das Kommunikationsgerät 3b noch innerhalb der Reichweite seiner Zuleitung 23 mobil, obwohl es ebenfalls angeschlossen ist. Ein Bediener dieses Kommunikationsgerätes 3b hat also noch Bewegungsspielraum und kann weiterhin in gewissen Grenzen seinen Standort bezüglich der Maschine 4 wählen. Das Kontaktstück 22 ist in Fig. 2 im Anschluss 7b verriegelt, da die Verriegelung 25 vorgeschwenkt ist und mit dem Schlüssel gegen zurückschwenken verschlossen ist. Das Kontaktstück 22 kann so ohne Schlüssel nicht wieder aus dem Anschluss 7b entfernt werden.

Die Anschlussstecker 19a sind mit den Anschlussbuchsen 19b verbunden, was die Datenanschlüsse 9a und 9b und die Kontakte 18a und 18b zur Spannungsversorgung und alle sonstigen enthaltenen Leitungen verbindet. Die Kommunikationsgeräte 3a,b sind somit über das Spannungsnetz 20 mit Energie aus dem Anlagenteil 2 versorgt und benötigen keine Energie mehr aus den in ihnen eingebauten Akkumulatoren. Diese werden über die Spannungsversorgung wieder aufgeladen, um für den nächsten Funkbetrieb gemäß Fig. 1 genügend Energie zu speichern. Außerdem ist es so möglich, z.B. die Helligkeit der hintergrundbeleuchteten Anzeige 12 auf maximale Leuchtstärke zu erhöhen, da aus der Spannungsversorgung vom Anlagenteil 2 her genügend Energie hierfür zur Verfügung steht. Im Akkubetrieb gemäß Fig. 1 ist die Helligkeit meist reduziert, um Energie zu sparen.

Da die Steuerung 5 durch die niedergehaltenen Sensoren 8 über die Information verfügt, dass die Kommunikationsgeräte 3a,b angeschlossen sind, wird der Datenaustausch zwischen Kommunikationsgerät 3a,b und Steuerung 5 von drahtlos auf drahtgebunden umgeschaltet, die Antennen 15,16 sind also außer Betrieb. Der Datenverkehr erfolgt entlang der Kommunikationsstrecke 13a,b, die nun vom Kommunikationsgerät 3a,b über die Datenanschlüsse 9a,b und den Feldbus 10 erfolgt.

Zur Umschaltung zwischen drahtgebundenem und -losem Datenaustausch ist z.B. in der Steuerung 5 ein nicht dargestellter Umschalter integriert. Dies kann ein Programmteil des Steuerungsprogramms sein, aber auch ein real existierender Schalter. Im vorliegenden Fall ist der Umschalter mit den Sensoren 8 derart verknüpft, dass die Umschaltung automatisch erfolgt, sobald sich der Schaltzustand der Sensoren 8 ändert.

Die Bedienung der gesamten Anlage 1 erfolgt also weiterhin mit den selben Kommunikationsgeräten 3a,b wie in Fig. 1. Die Umschaltung von kabelgebundenem auf Funkbetrieb kann während des Betriebs der Anlage 1 jederzeit wieder dadurch erfolgen, dass die Kommunikationsgeräten 3a,b von den Anschlüssen 7a,b wieder entfernt werden.

Es ist natürlich auch möglich, nur ein Kommunikationsgerät 3a oder 3b vom entsprechenden Anschluss 7a,b zu entfernen und nur dieses drahtlos zu bedienen, während das andere Kommunikationsgerät 3b,a weiterhin drahtgebunden mit der Steuerung 5 kommuniziert. Die Verwertung der Informationen aus den entsprechenden Sensoren 8 in der Steuerung 5 und den Kommunikationsgeräten 3a,b in einem derartigen Fall ist natürlich auf die Bedürfnisse der entsprechenden Produktionsanlage 1 abzustimmen.

## Patentansprüche

1. Vorrichtung zur Kommunikation mit einer Anlage (2), insbesondere einer Automatisierungsanlage in der industriellen Fertigung, mit einem mobilen Kommunikationsgerät (3a,b) zum drahtlosen Datenaustausch mit der Anlage (2), mit dem die Anlage (2) in sämtlichen Betriebsmodi bedien- und beobachtbar ist, und mit einem ortsfest installierten Anschluss (7a,b) für das Kommunikationsgerät (3a,b), und mit einem Sensor (8) zur Erkennung, ob das Kommunikationsgerät (3a,b) am Anschluss (7a,b) angeschlossen ist, wobei die Bedien- und Beobachtungsfunktionalität des Kommunikationsgerätes (3a,b) von der Erkennung abhängt.

2. Vorrichtung nach Anspruch 1, die die Anlage in den Normalbetrieb schaltet, wenn das Kommunikationsgerät angeschlossen ist, und die Anlage in einem Einrichte- oder Korrekturbetriebschaltet, wenn das Kommunikationsgerät nicht angeschlossen ist.

3. Vorrichtung nach Anspruch 1 oder 2, bei dem das Kommunikationsgerät (3) eine Anschlussleitung (23) aufweist und der Anschluss (7b) einen Leitungsanschluss (19a) für die Anschlussleitung (23) enthält.

4. Vorrichtung nach einem der vorherigen Ansprüche, bei dem der Anschluss (7a) eine Ablage (24) enthält, in der das Kommunikationsgerät (3a) ablegbar ist.

5. Vorrichtung nach einem der vorhergehenden Ansprüche 1 bis 3, bei der das Kommunikationsgerät (3a,b) am Anschluss (7a,b) verschließbar verankert ist.

6. Vorrichtung nach einem der vorhergehenden Ansprüche, bei dem der Sensor (8) ein mit dem Kommunikationsgerät (3a,b) oder dessen Anschlussleitung (23) zusammenwirkender Schalter ist.

7. Vorrichtung nach einem der vorhergehenden Ansprüche, mit einem Datenanschluss (9a,b) zum drahtgebundenen Datenaustausch zwischen Anlage (2) und Kommunikationsgerät (3a,b), und mit einem Umschalter zur Umschaltung zwischen drahtlosem und drahtgebundenem Datenaustausch.

8. Vorrichtung nach Anspruch 7, bei der der Sensor (8) mit dem Umschalter derart zusammenwirkt, dass eine automatische Umschaltung auf drahtgebundenen Datenaustausch erfolgt, wenn das Kommunikationsgerät (3a,b) am Anschluss (7a,b) angeschlossen ist.

9. Vorrichtung nach einem der vorhergehenden Ansprüche, bei der der Anschluss (7a,b) eine Spannungsversorgung (18a,b) für das Kommunikationsgerät (3a,b) enthält.

## Claims

1. Apparatus for communicating with a system (2), in particular an automation system in industrial manufacturing, including a mobile communication device (3a,b) for wirelessly exchanging data with the system (2), with which the system (2) can be controlled and monitored in all operating modes, and including a connection interface (7a,b) for the communication device (3a,b), said connection interface (7a,b) being installed at a fixed location, and including a sensor (8) for identifying whether the communication device (3a,b) is connected to the connection interface (7a,b), with the control and monitoring functionality of the communication device (3a, b) depending on the identification.

2. Apparatus according to claim 1, which switches the system into the normal mode if the communication device is connected and switches the system into a set-up operation or correction operation if the communication device is not connected.

3. Apparatus according to claim 1 or 2, in which the communication device (3) features an interface cable (23) and the connection interface (7b) includes a cable connection interface (19a) for this interface cable (23).

4. Apparatus according to one of the preceding claims, in which the connection interface (7a) includes a storage location (24) in which the communication device (3a) can be placed.

5. Apparatus according to one of the preceding claims 1 to 3, in which the communication device (3a,b) is fixed in the connection interface (7a,b) in a lockable manner.

6. Apparatus according to one of the preceding claims, in which the sensor (8) is a switch which interacts with the communication device (3a,b) or its interface cable (23).

7. Apparatus according to one of the preceding claims, including a data connection interface (9a,b) for wire-based data interchange between system (2) and communication device (3a,b), and including a changeover unit for changing over between wireless and wire-based data interchange.

8. Apparatus according to claim 7, in which the sensor (8) interacts with the changeover unit in such a way that the changeover to wire-based data interchange takes place automatically if the communication device (3a,b) is connected to the connection interface (7a,b).

9. Apparatus according to one of the preceding claims, in which the connection interface (7a,b) includes a power supply (18a,b) for the communication device (3a,b).

## Revendications

1. Dispositif de communication avec une installation ( 2 ), notamment une installation d'automatisation de la production industrielle, comprenant un appareil ( 3a, b ) mobile de communication qui est destiné à échanger des données sans fil avec l'installation ( 2 ) et par lequel on peut faire fonctionner et observer l'installation ( 2 ) dans tous les modes de fonctionnement, et comprenant une connexion ( 7a, b ) installée à poste fixe pour l'appareil ( 3a, b ) de communication, et comprenant un capteur ( 8 ) pour détecter si l'appareil ( 3a, b ) de communication est raccordé à la connexion ( 7a, b ), la fonctionnalité de fonctionnement et d'observation de l'appareil ( 3a, b ) de communication dépendant de la détection.

2. Dispositif suivant la revendication 1, qui branche l'installation dans le fonctionnement normal lorsque l'appareil de communication est raccordé et qui branche l'installation dans un fonctionnement de réglage ou de correction lorsque l'appareil de communication n'est pas raccordé.

3. Dispositif suivant la revendication 1 ou 2, dans lequel l'appareil ( 3 ) de communication a une ligne ( 23 ) de connexion et la connexion ( 7b ) comporte une connexion ( 19a ) pour la ligne ( 23 ) de connexion.

4. Dispositif suivant l'une des revendications précédentes, dans lequel la connexion ( 7a ) comporte une réception ( 24 ) dans laquelle l'appareil ( 3a ) de communication peut être mis.

5. Dispositif suivant l'une des revendications précédentes 1 à 3, dans lequel l'appareil ( 3a, b ) de communication est arrimé à la connexion ( 7a, b ) d'une manière pouvant être fermée.

6. Dispositif suivant l'une des revendications précédentes, dans lequel le capteur ( 8 ) est un commutateur coopérant avec l'appareil ( 3a, b ) de communication ou avec sa ligne ( 23 ) de connexion.

7. Dispositif suivant l'une des revendications précédentes, comprenant une connexion ( 9a,b ) de données pour l'échange de données par fil entre l'installation ( 2 ) et l'appareil ( 3a,b ) de communication et comprenant un commutateur pour commuter entre l'échange de données sans fil et l'échange de données par fil.

8. Dispositif suivant la revendication 7, dans lequel le capteur ( 8 ) coopère avec le commutateur de manière à effectuer une commutation automatique sur l'échange de données par fil lorsque l'appareil ( 3a, b ) de communication est raccordé à la connexion ( 7a, b ).

9. Dispositif suivant l'une des revendications précédentes, dans lequel la connexion ( 7a, b ) comporte une alimentation ( 18a, b ) en tension pour l'appareil ( 3a, b ) de communication.
